# EUROPEAN PATENT SPECIFICATION

(11) **EP 3 524 465 B1**
(45) Date of publication and mention of the grant of the patent: **20.07.2022**
(21) Application number: 18155746.3
(22) Date of filing: 08.02.2018
(51) Int. Cl.: B60L 53/18

(54) **CABLE GUIDE, AC CHARGER, TOOL FOR THE ASSEMBLY OF AN AC CHARGER AND METHOD OF ASSEMBLING AN AC CHARGER**
KABELFÜHRUNG, WECHSELSTROMLADEGERÄT, WERKZEUG ZUR MONTAGE EINES WECHSELSTROMLADEGERÄTS UND VERFAHREN ZUR MONTAGE EINES WECHSELSTROMLADEGERÄTS
GUIDE-CÂBLE, CHARGEUR CA, OUTIL ET PROCÉDÉ D'ASSEMBLAGE D'UN CHARGEUR CA

(43) Date of publication of application: 14.08.2019
(73) Proprietor: Aptiv Technologies Limited, St. Michael (BB)
(72) Inventor: DROESBEKE, Gert, 40699 ERKRATH (DE); SCHROEDTER, Tim-Arvid, 45239 ESSEN (DE); OEKEN, Andre, 40627 DÜSSELDORF (DE); RENFORDT, Jannik, 42653 SOLINGEN (DE); DUBBERT, Stefan, 58332 SCHWELM (DE); KLEINHOELTIG, Andre, 48653 COESFELD (DE)
(74) Representative: Manitz Finsterwald Patent- und Rechtsanwaltspartnerschaft mbB

(56) References cited:
- EP-A1- 2 882 055
- EP-A2- 2 423 028
- DE-A1- 2 758 782
- DE-U1-202011 050 550
- JP-A- 2011 109 879

## Description

The present invention relates to an AC charger for an electric or hybrid vehicle, and to a method of assembling an AC charger.

Electric vehicles and hybrid vehicles comprise vehicle batteries used as a supply of energy for the vehicle drive chain. Once the batteries are empty, the batteries require charging. The different charging modes available are set out by the International Electrotechnical Commission and include, for example, the charging via the household electric mains supply of e.g.

240V AC in Europe or 110V AC in USA. In addition to charging via the household mains supply, single phase charging, three phase charging and fast charging is possible using different types of couplers known e.g. as Type 1 / 2 / GBT couplers etc. These couplers are then connected to either the vehicle directly or via an AC charger that then provides a vehicle specific charging voltage at a vehicle specific plug interface.

Depending on the use of the vehicle and the available charging options a user can connect an AC charger to the available mains power supply of the infrastructure via different kinds of cables having the respective types of couplers at their end and connectable to the available mains power supply. The AC charger can then provide the available power from the infrastructure at the vehicle. The various available mains power supplies can thereby make available currents between 16 and 40A and up to a power of 11KW for the various types of couplers (1 / 2 / GBT). This current at the available power is then used to provide the vehicle specific charging mode. Preferably the AC charger has a separable interface for the different infrastructure cables, i.e. a respective cable for each infrastructure.

The housing of the AC charger is subjected to requirements on EMC (electromagnetic compatibility), robustness, water-tightness, illumination, the materials used and size of the housing.

An AC charger in accordance with the preamble of claim 1 is disclosed in EP2882055A1.

It is an object of the present invention that makes available a housing for an AC charger that fulfills the above requirements and is capable of being produced in a facile manner while reducing the overall size of the AC charger.

This object is satisfied by an AC charger in accordance with claim 1. Beneficial designs of the cable guide are presented in the dependent claims.

Such AC charger comprises a base, an input region and an output region, wherein the input region and the output region are respectively arranged at the base and respectively comprise a plurality of input and output conductor receivers, with at least ends of the respective plurality of input and output conductor receivers being arranged at least generally in parallel to one another and such that the ends extend at least substantially perpendicular to the base.

The provision of the respective plurality of conductor receivers at sides of the cable guide facilitates the positioning of respective conductors of respective cables used with the cable guide. Moreover, on use of the cable guide, a position and orientation of conductor ends received in the cable guide can be fixed, so that the conductors are positioned correctly for their further use on assembly of the corresponding PCB in a simple and fast manner.

By means of the cable guide the conductors of the respective cables are routed in a predefined manner within the housing permitting the number of problems relating to EMC to be able to be reduced.

The AC charger comprises alignment means configured to ensure a correct alignment of the cable guide relative to a housing of the AC charger in its installed state. By including alignment means an assembly of the corresponding AC charger can be facilitated and prevent faulty assemblies of the AC charger and thereby increase the cost effectiveness of the manufactured AC chargers.

Preferably the input region and the output region are arranged opposite one another at opposite sides of the base. Thereby a simple and compact arrangement of the input and output cables can be achieved further reducing the size of the housing.

It is preferred if the cable guide is of one-piece design, this ensures a simple manufacture of the cable guide in a reproducible manner and enhances robustness of the resultant housing of the AC charger. In this connection it should be noted that the cable guide can, for example, be produced from a plastic material, e.g. in an injection molding process.

Advantageously at least some of and preferably all of the respective plurality of input conductor receivers are formed in an input wall present at the input region and at least some of and preferably all of the respective plurality of output conductor receivers are formed in an output wall present at the output region, with the input wall and the output wall respectively extending from the base.

Forming the respective plurality of input conductor receivers and output conductor receivers in a respective input wall and output wall minimizes the number of components and the size of the cable guide and thereby makes its manufacture more cost effective. A reduction in size and increase in robustness leads to less of a surface area that needs to be sealed off to improve the water-tightness of the housing and thereby improves the housing also in this respect.

Preferably the input wall has a different average height than the output wall and/or wherein the input wall has a top side, with at least a part of the top side extending in parallel to the base and optionally with the distance between the top side and the base changing over a width of the input wall, preferably wherein one or more of the input conductor receivers is arranged at a different height relative to the base to other ones of the input conductor receivers; and/or wherein a top side of the output wall extends at least substantially in parallel to the base. In this way the cable guide can be tailored specifically to the shape of a power board comprising a PCB and electronic components of the AC charger so that a size of the housing can further be reduced.

It is preferred if the input conductor receivers are configured as channels in the input wall and the output conductor receivers are configured as channels in the output wall. Channels form beneficial types of receivers for cables. In this connection it should be noted that the respective channel is optionally shaped in a manner complementary to the cable, i.e. could have a round internal diameter and/or be shaped to expediently guide the conductor to the end of the conductor receiver along the input wall and/or the output wall.

In this connection it is particularly advantageous if the channels extend over at least some of the height of the respective input wall and output wall, optionally with the channels extending at least partly perpendicular or at least substantially perpendicular to the base. Thereby defining the position of the routing of the conductors within the cable guide in an improved manner.

It is preferred if, in particular a part of a top side of, the input wall and, in particular a part of a top side of, the output wall are configured to be coupled to a PCB and with a space formed between the PCB, the input wall, the output wall and the base being configured as a space for the reception and storage of electronic components associated with the PCB. In this way the size of a housing of an AC charger can be reduced increasing the robustness of the housing. Moreover, such an arrangement is beneficial with respect to EMC.

Preferably the PCB alignment means comprise one or more of a PCB alignment means configured as at least one of a pin, a web of material, a dome, and a projection, and optionally being provided at at least one of the input wall and the output wall, and configured to be coupled to a PCB for an alignment of the PCB with respect to the cable guide.

Using e.g. domes, for example two domes, as part of the cable guide can help in the correct positioning of the cable guide and the conductor ends relative to a PCB of the corresponding AC charger.

It is preferred if the PCB of alignment means are configured such that an alignment of the PCB with respect to the cable guide can take place in at least one of an X-direction, a Y-direction and a Z-direction. In this way the PCB can be aligned in three spatial dimensions relative to the cable guide and more importantly in an expedient manner facilitating the manufacture of the resultant AC charger.

Advantageously the alignment means may be configured as one of a cut-out, an aperture, a recess, with the alignment means optionally being provided at the base, and configured to ensure an alignment of the base of the cable guide with respect to the housing that can be coupled to the base. The alignment means can thereby ensure the correct positioning of the cable guide in the housing of the AC charger.

It is preferred if the alignment means are configured such that an alignment of the cable guide with respect to the housing can take place in at least one of an X-direction and a Y-direction. In this way the cable guide can be aligned in two spatial dimensions relative to the housing and more importantly in an expedient manner facilitating the manufacture of the resultant AC charger.

Preferably the cable guide further comprises one or more reinforcement webs that connect at least one of the input wall and the output wall to the base and/or to the other one of the input wall and the output wall. Such reinforcement webs can be used to increase the robustness and stability of the cable guide.

According to a further aspect the present invention relates to an AC charger for an electric or hybrid vehicle. The AC charger comprises:
a two-part housing;
a cable guide in accordance with one of the preceding claims installed in a bottom part of said housing, and
a PCB installed between said input region, said output region and said base of the cable guide,
wherein a plurality of input and output conductors are guided in said input and output conductor receivers and respective ends of the plurality of input and output conductors are connected to the PCB in a common plane.

By forming the individual conductors in a common plane the height of the housing of the AC charger can be reduced. Moreover, the respective cables are routed in the housing in a simple and expedient manner and thereby the number of problems relating to EMC can be reduced.

Preferably the PCB comprises electronic components that are arranged on the PCB and present in a space formed between the base, the PCB, the input region and the output region, with a remaining part of the space base being filled with a material.

Such a material can be a filler material, an adhesive or a thermally or electrically insulating material that can improve at least one of the water-tightness, the robustness, the safety and properties of EMC of the AC charger.

Tools can beneficially be used to align the ends of the conductors of various cables associated with the AC charger in a common plane to facilitate the connection, e.g. by way of soldering of the various cables to the PCB of the AC charger.

A method of assembling an AC charger is disclosed in claim 13. The method comprising the steps of:
- inserting the plurality of individual conductors into the housing of the AC charger;
- placing the plurality of individual conductors into the input and output conductor receivers of the cable guide;
- aligning ends of the plurality of individual conductors in a common plane; and
- optionally connecting the aligned ends of the plurality of individual conductors to the PCB.

The method of assembling an AC charger can comprise a tool; the tool comprising an alignment plate and a plurality of first recesses present in the alignment plate, which each of the plurality of first recesses being configured to receive ends of respective input and output conductors, with each of the plurality of first recesses having a base and each of the bases of the plurality of first recesses being arranged in a common place, the alignment plate optionally comprising one or more second recesses configured to receive PCB alignment means of the cable guide so that the ends of the input and output conductors can be aligned relative to said PCB alignment means.

Further embodiments of the invention are described in the following description of the Figures. The invention will be explained in the following in detail by means of embodiments and with reference to the drawing in which is shown:
- Fig. 1: a perspective view of a cable guide not covered by the claims;
- Fig. 2: a perspective view of a cable guide according to the invention;

- Fig. 3A to C: views of a tool for assembling an AC charger;
- Fig. 4: an exploded view of components of an AC charger; and
- Fig. 5: a perspective view of a cover of the AC charger of Fig. 4

In the following the same reference numerals will be used for parts having the same or equivalent function. Any statements made having regard to the direction of a component are made relative to the position shown in the drawing and can naturally vary in the actual position of application.

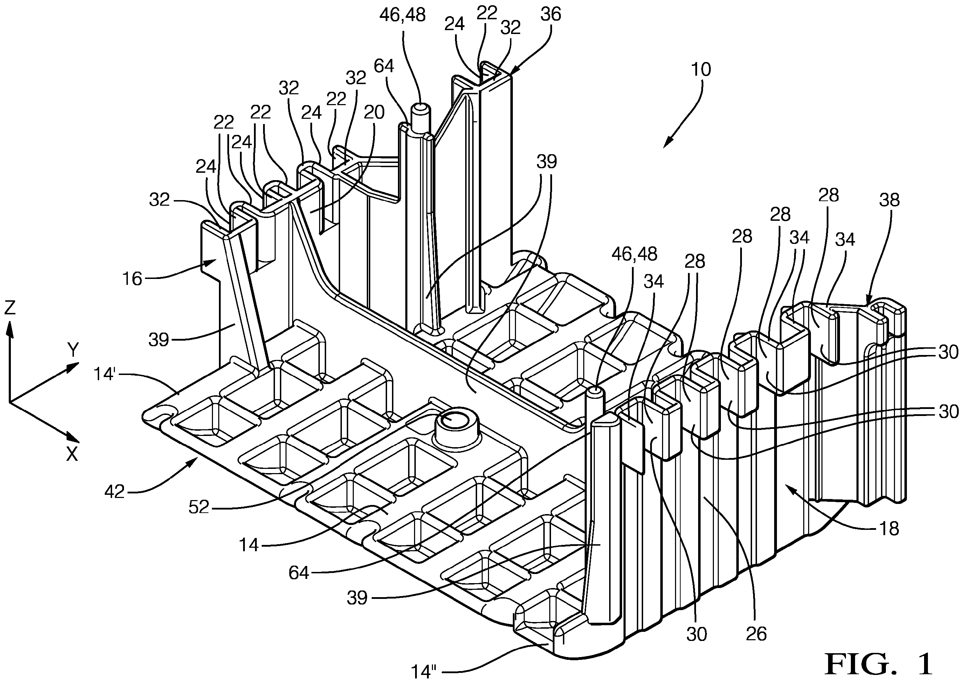

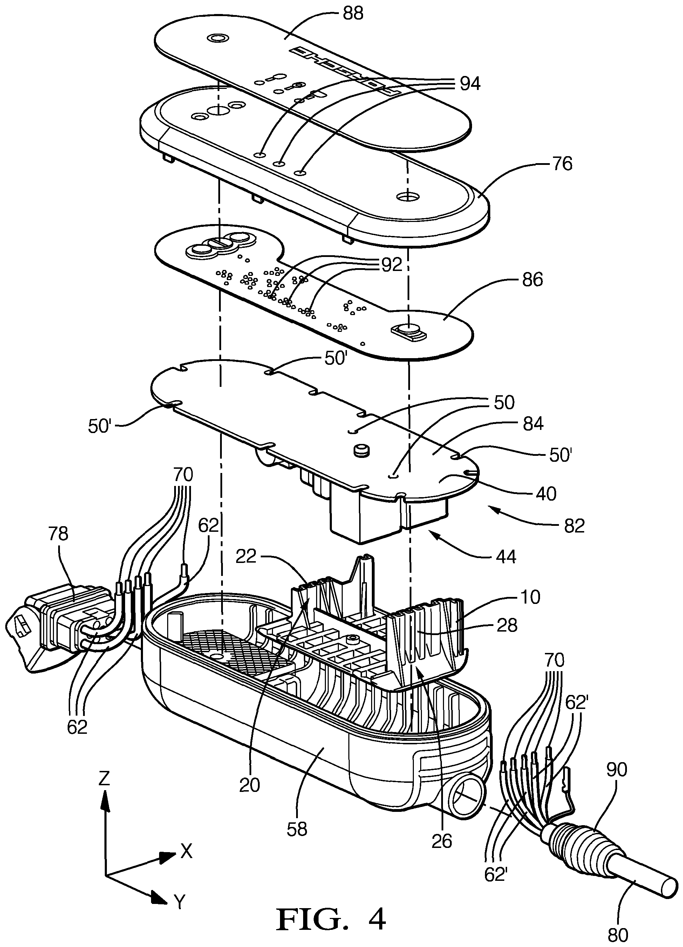

Fig. 1 shows a first embodiment, not covered by the claims, of a cable guide 10 for an AC charger 12 (see Fig. 4). The cable guide 10 shown in Fig. 1 is of one-piece design.

The cable guide 10 comprises a base 14, an input region 16 and an output region 18. The input region 16 and the output region 18 are arranged opposite one another at opposite sides 14', 14" of the base 14. The three spatial dimensions of the cable guide 10 comprise the X-direction, the Y-direction and the Z-direction are also noted for the purpose of reference.

The input region 16 is formed by an input wall 20 and comprises a plurality of input conductor receivers 22 each formed by a respective channel 24, with the respective channel 24 being configured for the reception of one conductor 62 (see Fig. 4). The output region 18 is formed by an output wall 26 and comprises a plurality of output conductor receivers 28 formed by a respective channel 30, with the respective channel 30 being configured for the reception of one conductor 62' (see Fig. 4). The input wall 20 and the output wall 26 respectively extend from the base 14.

Ends 32 of the plurality of input conductor receivers 22 and ends 34 of the output conductor receivers 28 are arranged at least generally in parallel to one another and such that the ends 32, 34 extend at least substantially perpendicular to the base 14.

Due to electronic components 44 (see Fig. 4) of the AC charger 12, a height of the channels 24 and a height of the respective input wall 20 varies over a length of the input wall 20, whereas the height of the channels 30 and of the output wall 26 is essentially constant.

In this connection it should be noted that the height of the channels 24 and the height of the respective input wall 20 could be essentially constant over the length of the input wall and indeed be the same as the height of the output wall 26. Moreover, the height of the channels 30 and of the output wall 26 could also vary over a length of the output wall 26, in order to accommodate electronic components if a differently designed PCB were to be used.

In the present instance the channels 24, 30 extend over 25% of a height of the respective input wall 20 and output wall 26. It is feasible that the channels 24, 30 extend over more or less of the height of the respective input wall 20 and output wall 26. For example, the length of the respective channel can be selected to lie in the range of 10 to 100%, preferably 15 to 50 % and especially of 18 to 35% of the height of the respective input wall 20 and output wall 26.

The channels 24, 30 can be configured to extend at least in part perpendicular to the base 14. In Fig. 1 the channels 24, 30 are depicted as extending perpendicular to the base 14 over their entire length from the base 14 to the ends 32, 34, with the ends 32, 34 comprising means for holding conductors 62, 62' of the AC charger 12 that are to be fixed in their position in the cable guide 10.

Other embodiments are feasible in which the channels 24, 30 extend in a curved manner from the base 14 to a top side 36 of the input wall 20 and/or to a top side 38 of the output wall 26.

As discussed in the foregoing the top side 36 of the input wall 20 comprises input conductor receivers 22 whose ends 32 are present at different distances to the base 14 such that only parts of the top side 36 extend in parallel to the base 14 over a width of the input wall 20. The top side 38 of the output wall 26 extends at least substantially in parallel to the base 14 over the complete width of the output wall 26. For this reason the input wall 20 has a different average height than the output wall 26.

In this connection it should be noted that the ends 32 could be present at equal distances to the base 14 such that the complete top side 36 extends in parallel to the base 14 over the width of the input wall 20, such that the height of the input wall 20 corresponds to a height of the output wall 26. Likewise the top side 38 of the output wall 26 could extend across the width of the output wall at varying distances to the base 14 such that only parts of the top side 38 extend in parallel to the base 14 over a width of the output wall 26, such that the output wall 26 could have a different average height than the input wall 20.

The cable guide 10 further comprises a plurality of reinforcement webs 39 that respectively reinforce the connection between the input wall 20 and the base 14, the base 14 and the output wall 26, as well as between the input wall 20, the base 14 and the output wall 26.

The input wall 20 and the output wall 26 are configured to be coupled to a PCB 40 (see Fig. 4 - a PCB is a printed circuit board). A space 42 formed between the PCB 40, the input wall 20, the output wall 26 and the base 14 is configured as a reception space for the reception and storage of electronic components 44 (see Fig. 4) associated with the PCB 40.

In order to correctly couple the input wall 20 and the output wall 26 to the PCB 40, the cable guide 10 comprises PCB alignment means 48 respectively present at the top sides 36 and 38. The PCB alignment means are configured to ensure a correct alignment and subsequent connection of the cable guide 10 in its installed state relative to the PCB 40.

To this end the PCB alignment means 48 are configured as at least one of a pin, a web of material, a dome, and a projection. A dome is provided at the top side 36 of the input wall 20 and a further dome is provided at the top side 38 of the output wall 26 as a PCB alignment means 48. Each of the PCB alignment means 48 is configured to be inserted into a corresponding cut-out 50 present in the PCB 40 for an alignment of the PCB 40 with respect to the cable guide 10.

The PCB alignment means 48 are positioned such that an X-Y position of the PCB 40 relative to the cable guide 10 is pre-defined. Moreover, the PCB alignment means 48 respectively comprise a base 64. Each of the bases 64 are arranged at the same height thereby pre-defining the position of the PCB 40 in the Z-direction. In this way the alignment means facilitate an alignment of the PCB 40 with respect to the cable guide 10 in the three spatial dimensions comprising the X-direction, the Y-direction and the Z-direction.

In order to connect the base 14 to a housing 58, 76 (see Fig. 4) of the AC charger 12 the base 14 comprises a point of fixation 52. The point of fixation can expediently be formed by a screw connection, a rivet connection, a hot rivet connection or other types of connections.

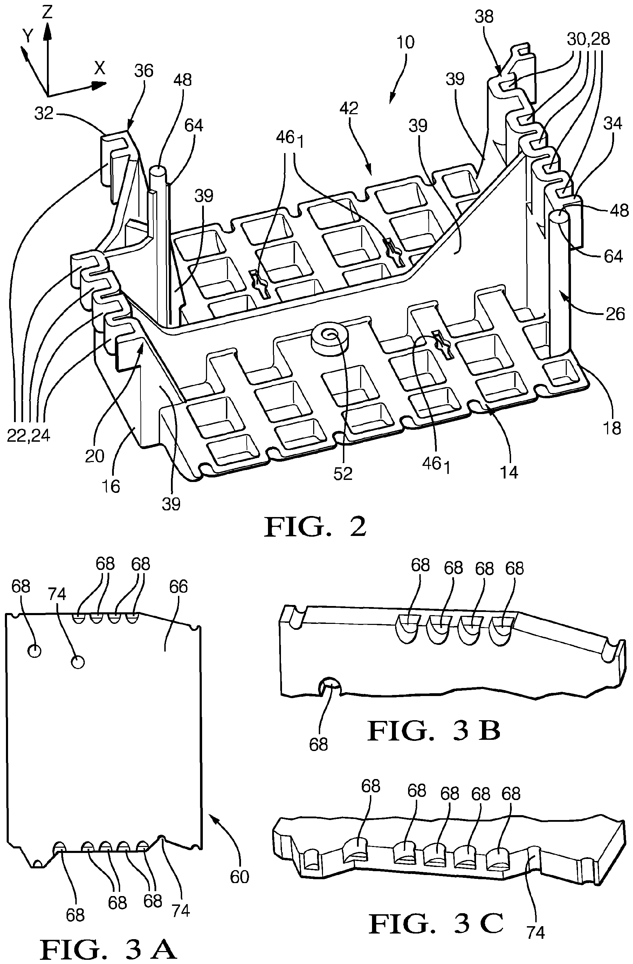

Fig. 2 shows a cable guide according to the invention. The cable guide 10 comprises alignment means 46₁ configured as one of a cut-out, an aperture, a recess. The alignment means 46₁ is provided at the base 14, and is configured to ensure a visual feedback of the correct alignment of the base 14 with respect to the housing that can be coupled to the base 14. For this purpose a bottom part 58 of the housing has webs of material (not shown) that can be aligned relative to the alignment means 46₁. Thereby the second type of alignment means 46₁ are configured such that an alignment of the cable guide 10 with respect to the housing can take place in both the X-direction and the Y-direction.

Figs. 3A to 3C show a tool 60 for the assembly of the AC charger 12. On assembly of the AC charger 12 a plurality of input and output conductors 62, 62' are connected to the PCB 40 in a common plane. Fig. 3A shows a view from below of the tool 60, Fig. 3B shows a view of the tool 60 associated with the input wall 20 of the cable guide 10 and Fig. 3C shows a view of the tool associated with the output wall 26 of the cable guide 10.

The tool 60 comprises an alignment plate 66 and a plurality of first recesses 68 present in the alignment plate 66. Each of the plurality of first recesses 68 is configured to receive ends 70 of respective input and output conductors 62, 62' arranged within the input and output conductor receivers 22, 28. Each of the plurality of first recesses 68 has a base 72 and each of the bases 72 of the plurality of first recesses 68 is arranged in a common plane.

The alignment plate 66 further comprises second recesses 74 configured to receive the PCB alignment means 48 of the cable guide 10 so that the ends 70 of the input and output conductors 62, 62' can be aligned relative to said second recesses 74. This alignment is required to ensure that the PCB 40 of the AC charger 12 can be correctly connected to ends 70 of the input and output conductors 62, 62'.

In this connection it should be noted that the alignment plate 66 can comprise coding means, such as color coding means, in order to ensure the correct placement of the alignment plate 66 at the PCB alignment means 48 of the cable guide 10.

Fig. 4 shows an exploded view of components of the AC charger 12. The AC charger 12 is configured to charge an electric vehicle or a hybrid vehicle (not shown). The AC charger 12 comprises the housing. The housing is a two-part housing comprising the bottom part 58 and a cover 76.

The cable guide 10 is installed in the bottom part 58. An infrastructure pin header 78 comprising five input conductors 62 is installed at the input region 16. A vehicle cable 80 comprising five output conductors 62' is installed at the output region 18.

The AC charger 12 further comprises a power board 82 comprising the PCB 40 and the further electronic components 44 associated with the provision of the output charging voltage required to charge batteries of an electric vehicle or hybrid vehicle. The PCB 40 of the power board 82 is connected to the cable guide 10 via the PCB alignment means 48. The ends 70 of the input and output conductors 62, 62' are connected to the PCB 40 in a common plane at a side 84 of the PCB 40 remote from the cable guide 10 and remote from the electronic components 44. For this purpose the plurality of input and output conductors 62, 62' are guided in said input and output conductor receivers 22, 28.

The electronic components 44 of the PCB 40 are arranged such that they extend into the space 42 formed between the PCB 40, the base 14, the input wall 20 and the output wall 26. The remaining part of the space 42 not filled with the electronic components 44 can be filled with a material, such as a filler material, an adhesive, an insulating material etc.

An HMI board 86 (human machine interface board) is present between the PCB 40 and the cover 76. The HMI board 86 comprises LEDs 92 (light emitting diodes) and enables a user of the AC charger 12 to inspect the state of charge of the electric or hybrid vehicle connected to the AC charger 12 by means of signals displayed via the LEDs 92. A front label 88 is also attachable to the cover 76 and can include manufacturer specific labeling and indications as to the meaning of the LEDs 92 present on the HMI board 86. In order to be able to see the status of the LEDs 92, the cover 76 comprises apertures 94 for the LEDs 92.

In use of the AC charger 12, the AC charger 12 can charge an electric vehicle or a hybrid vehicle by being connected to the vehicle by means of the vehicle cable 80.

An infrastructure cable (not shown) that connects the AC charger 12 to the power supply infrastructure is connected to the AC charger 12 via the infrastructure pin header 78. Different infrastructure cables can be connected to the infrastructure pin header 78. For example, a household mains supply cable for providing 110/240V AC (US/Europe) can be connected to the infrastructure pin header 78. Also other kinds of infrastructure cables can be connected to the AC charger 12 for charging the electric vehicle in different modes as set out by the International Electrotechnical Commission, by way of example, infrastructure cables with plugs of the type single phase, three phase, PARVE system, SAEJ1772, IEC62196, CHAdeMO can be connected to the infrastructure pin header 78, in order to charge the electric vehicle with currents between e.g. 16 and 40 A and up to 11 KW

The AC charger 12 can have outside dimensions with a length selected in the range of 20 to 40 cm, preferably of 25 to 35 cm, a height selected in the range of 4 to 10 cm, preferably of 6 to 8 cm, and a width selected in the range of 8 to 16 cm, preferably of 10 to 14 cm.

On assembling the AC charger 12, the infrastructure pin header 78 is inserted into the bottom part 58 of the housing and is held in position by means of a snap in connection (not shown). Thereafter the vehicle cable 80 is mounted in the bottom part 58, possibly on use of a grommet 90 and the individual conductors 62' of the vehicle cable 80 can be fixed into position by screw clamping (not shown) of the vehicle cable 80 as a form of cable relief.

Following this the cable guide 10 is inserted into the bottom part 58. In order to ensure a correct alignment of the cable guide 10, the alignment means 46₁ are used and provide a visual feedback on the correct alignment of the cable guide 10 with respect to the bottom part 58 in the X-Y direction. The cable guide 10 is then fixed to the bottom part 58 by means of hot riveting or screws via the point of fixation 52.

The respective conductors 62', 62 of the vehicle cable 80 and of the infrastructure pin header 78 are placed into the input and output conductor receivers 22, 28 of the cable guide 10 for a correct XY positioning and clamping of the conductors 62, 62' in the cable guide 10. In order to ensure the correct positioning of each conductor 62, 62' in the input and output conductor receivers 22, 28 coding means could be provided (not shown). By way of example the coding means can include a color code. Each conductor 62, 62' then has an allotted color and is inserted into the respective input and output conductor receiver 22, 28 marked with the allotted color.

The conductors 62, 62' are held in the input and output conductor receivers 22, 28 by means of holding means. In the present example the holding means are realized by means of a press-fit connection. To this end the inner diameter of the input and output conductor receivers 22, 28 is smaller than the outer diameter of the conductors 62, 62'. Other forms of holding means can also be employed. In addition to the holding means walls of the input and output conductor receivers 22, 28 can be configured as elastic in order to additionally ensure a clamping of the respective conductor 62, 62' in the input and output conductor receivers 22, 28.

Thereafter the ends 70 of the plurality of individual conductors 62, 62' are aligned in a common plane using the tool 60, so that the ends 70 respectively have the same height and hence alignment in the Z-direction. This alignment in the Z-direction is achieved by pressing down the conductor ends 70 with the tool 60 for an accurate positioning in the Z-direction.

The PCB 40 of the power board 82 is then placed on the cable guide 10 and the PCB alignment means 48 are inserted into two cut-outs 50 present at the PCB for a correct alignment of the PCB 40 relative to the cable guide 10. The PCB alignment means can be connected to the PCB 40 by means of hot riveting. The PCB 40 may also comprise further cut-outs 50' that align with domes (not shown) present at the bottom part 58. These domes of the bottom part 58 of the housing can also be hot riveted to the PCB 40 in order to fix the PCB 40 into position within the bottom part 58.

At the same time the ends 70 of the conductors 62, 62' of the vehicle cable 80 and of the infrastructure pin header 78 are inserted into soldering points of the PCB 40. Thereafter the XYZ-positioned conductor ends 70 project through the PCB 40 with the correct length and can be soldered selectively.

The ends 70 of the conductors 62, 62' are then selectively soldered in an automated process to the PCB 40. Following the connection of the PCB 40 to the bottom part 58, the cable guide 10 and the ends 70 of the conductors 62, 62', the HMI 86 is positioned between the PCB 40 and the cover 76 and is subsequently connected to the cover 76. The cover 76 is then connected to the bottom part 58. A seal (not shown) can be provided between the cover 76 and the bottom part 58 on a connection thereof. The cover 76 can also be provided with the front label 88.

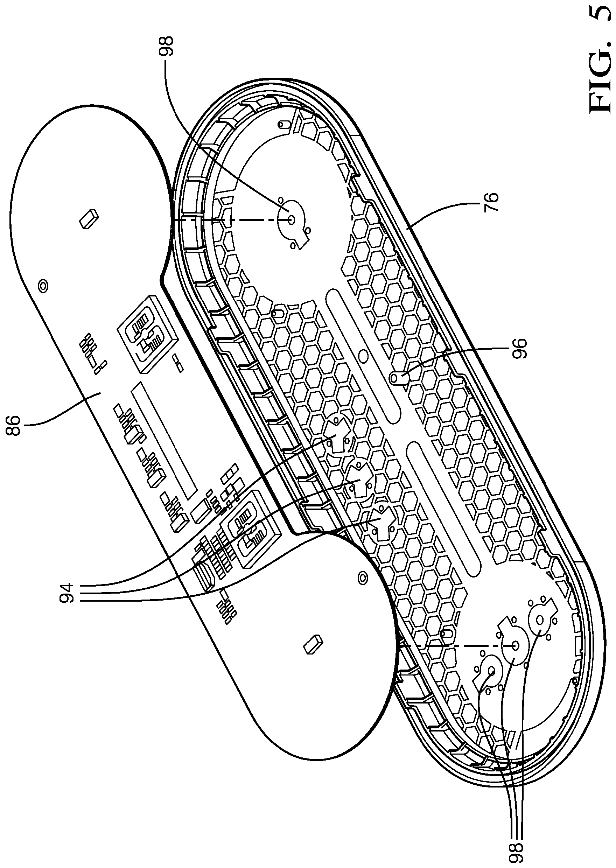

As indicated in Fig. 5, the cover 76 comprises the apertures 94 for indicating the state of charge of the AC charger 12 by means of the LEDs 92. Further light guides 98 are also present that can, for example, be used to indicate what kind of charging is taking place, the status of the AC charger 12, i.e. whether this is connected to the mains power supply via an infrastructure cable or not, what kind of vehicle is connected to the AC charger 12 etc.

A point 96 is also indicated at the inside of the cover 76. This point 96 aligns with one of the PCB alignment means 48. This point 96 is configured to intercept a pressure acting on the cover 76, e.g. due to the AC charger 12 accidentally being dropped or driven over by a vehicle, in order to prevent the pressure being transmitted fully to the PCB 40 and the electronic components 44 which would render these ineffective.

**List of reference numerals:**

| | | | |
|---|---|---|---|
| 10 | cable guide | | |
| 12 | AC charger | | |
| 14 | base | 58 | bottom part |
| 14', 14" | side of base | 60 | tool |
| 16 | input region | 62, 62' | conductors |
| 18 | output region | 64 | base of 48 |
| 20 | input wall | 66 | alignment plate |
| 22 | input conductor receiver | 68 | first recess |
| 24 | channel | 70 | ends of 62, 62' |
| 26 | output wall | 72 | base |
| 28 | output conductor receiver | 74 | second recess |
| 30 | channel | 76 | cover |
| 32 | end | 78 | infrastructure pin header |
| 34 | end | 80 | vehicle cable |
| 36 | top side of 20 | 82 | power board |
| 38 | top side of 26 | 84 | side |
| 39 | reinforcement web | 86 | HMI board |
| 40 | PCB | 88 | front label |
| 42 | space | 90 | grommet |
| 44 | electronic components | 92 | LED |
| 46₁ | alignment means | 94 | aperture |
| 48 | PCB alignment means | 96 | point of fixation |
| 50, 50' | cut-out | 98 | light guide |
| 52 | point of fixation | | |

## Claims

1. AC charger (12) comprising a housing (58, 76) and a cable guide (10) positioned in the housing (58, 76), **characterized in that** the cable guide (10) comprises a base (14), an input region (16) and an output region (18), wherein the input region (16) and the output region (18) are respectively arranged at the base (14) and respectively comprise a plurality of input and output conductor receivers (22, 28), with at least ends (32, 34) of the respective plurality of conductor receivers (22, 28) being arranged at least generally in parallel to one another and such that the ends (32, 34) extend at least substantially perpendicular to the base (14), and **in that** the cable guide (10) comprises alignment means (46₁) configured to ensure a correct alignment of the cable guide (10) relative to a bottom part (58) of the housing (58, 76) of the AC charger (12) in its installed state.

2. AC charger (12) in accordance with claim 1,
wherein the input region (16) and the output region (18) are arranged opposite one another at opposite sides (14', 14") of the base (14) and/or
wherein the cable guide (10) is of one-piece design.

3. AC charger (12) in accordance with claim 1 or claim 2,
wherein at least some of and preferably all of the respective plurality of input conductor receivers (22) are formed in an input wall (20) present at the input region (16) and at least some of and preferably all of the respective plurality of output conductor receivers (28) are formed in an output wall (26) present at the output region (18), with the input wall (20) and the output wall (26) respectively extending from the base (14).

4. AC charger (12) in accordance with claim 3,
wherein the input wall (20) has a different average height than the output wall (26) and/or wherein the input wall (20) has a top side (36), with at least a part of the top side (36) extending in parallel to the base (14) and optionally with the distance between the top side (36) and the base (14) changing over a width of the input wall (20), preferably wherein one or more of the input conductor receivers (22) is arranged at a different height relative to the base (14) to other ones of the input conductor receivers (22); and/or wherein a top side (38) of the output wall (26) extends at least substantially in parallel to the base (14).

5. AC charger (12) in accordance with claim 3 or claim 4,
wherein the input conductor receivers (22) are configured as channels (24) in the input wall (20) and/or wherein the output conductor receivers (28) are configured as channels (30) in the output wall (26).

6. AC charger (12) in accordance with claim 5,
wherein the channels (24, 30) extend over at least some of the height of the respective input wall (20) and output wall (26), optionally with the channels (24, 30) extending at least partly perpendicular or at least substantially perpendicular to the base (14).

7. AC charger (12) in accordance with one of the preceding claims,
wherein, in particular a part of a top side (36) of, the input wall (20) and, in particular a part of a top side (38) of, the output wall (26) are configured to be coupled to a PCB (40) and with a space formed between the PCB (40), the input wall (20), the output wall (26) and the base (14) being configured as a space (42) for the reception and storage of electronic components (44) associated with the PCB (40).

8. AC charger (12) (10) in accordance with claim 1,
wherein PCB alignment means (48) are provided being configured as at least one of a pin, a web of material, a dome, and a projection, with one or more of the PCB alignment means (48) optionally being provided at at least one of the input wall (20) and the output wall (26), and being configured to be coupled to a PCB (40) for an alignment of the PCB (40) with respect to the cable guide (10), wherein the PCB alignment means (48) are preferably configured such that an alignment of the PCB (40) with respect to the cable guide (10) can take place in at least one of an X-direction, a Y-direction and a Z-direction.

9. AC charger (12) in accordance with claim 1,
wherein the alignment means (46₁) is configured as one of a cut-out, an aperture, a recess, with the alignment means (46₁) optionally being provided at the base (14), wherein the alignment means (46₁) are preferably configured such that an alignment of the cable guide (10) with respect to the housing can take place in at least one of an X-direction and a Y-direction.

10. AC charger (12) in accordance with at least one of the preceding claims,
further comprising one or more reinforcement webs (39) that connect at least one of the input wall (20) and the output wall (26) to the base (14) and/or to the other one of the input wall (20) and the output wall (26).

11. AC charger (12) in accordance with one of the preceding claims for an electric or hybrid vehicle, wherein
the housing (58, 76) is a two-part housing (58, 76);
the cable guide (10) is installed in a bottom part (58) of said housing, and
a PCB (40) is installed between said input region (16), said output region (18) and said base (14) of the cable guide (10), wherein a plurality of input and output conductors (62, 62') are guided in said input and output conductor receivers (22, 28) and respective ends (70) of the plurality of input and output conductors (62, 62') are connected to the PCB (40) in a common plane.

12. AC charger (12) in accordance with claim 11,
wherein the PCB (40) comprises electronic components (44) that are arranged on the PCB (40) and present in a space (42) formed between the base (14), the PCB (40), the input region (16) and the output region (18), with a remaining part of the space (42) being filled with a material.

13. A method of assembling an AC charger (12) in accordance with at least one of the claims 11 and 12, the method comprising the steps of: - inserting the plurality of individual conductors (62, 62') into the housing (58, 76) of the AC charger (12); - placing the plurality of individual conductors (62, 62') into the respective input and output conductor receivers (22, 28) of the cable guide (10); - aligning ends (70) of the plurality of individual conductors (62, 62') in a common plane; and - connecting the aligned ends (70) of the plurality of individual conductors to the PCB (40.)

14. A method according to claim 13, wherein a tool (60) for the assembly of an AC charger (12) is used, in which AC charger (12) a plurality of conductors (62, 62') are connected to a PCB (40) in a common plane, the tool (60) comprising an alignment plate (66) and a plurality of first recesses (68) present in the alignment plate (66), with each of the plurality of first recesses (68) being configured to receive ends (70) of respective input and output conductors (62, 62'), with each of the plurality of first recesses (68) having a base (72) and each of bases (72) of the plurality of first recesses (68) being arranged in a common plane, the alignment plate (66) optionally comprising one or more second recesses (74) configured to receive PCB alignment means (48) of the cable guide (10) so that the ends (70) of the input and output conductors (62, 62') can be aligned relative to said PCB alignment means (48).

## Patentansprüche

1. Wechselstrom-Ladegerät (12) mit einem Gehäuse (58, 76) und einer in dem Gehäuse (58, 76) angeordneten Kabelführung (10),
**dadurch gekennzeichnet, dass** die Kabelführung (10) umfasst
eine Basis (14), einen Eingangsbereich (16) und einen Ausgangsbereich (18), wobei der Eingangsbereich (16) und der Ausgangsbereich (18) jeweils an der Basis (14) angeordnet sind und jeweils eine Vielzahl von Eingangs- und Ausgangsleiteraufnahmen (22, 28) umfassen, wobei zumindest Enden (32, 34) der jeweiligen Vielzahl von Leiteraufnahmen (22, 28) zumindest allgemein parallel zueinander und derart angeordnet sind, dass sich die Enden (32, 34) zumindest im Wesentlichen rechtwinklig zu der Basis (14) erstrecken,
und dadurch, dass
die Kabelführung (10) Ausrichtungsmittel (46₁) umfasst, die so ausgestaltet sind, dass sie eine korrekte Ausrichtung der Kabelführung (10) relativ zu einem unteren Teil (58) des Gehäuses (58, 76) des Wechselstrom-Ladegeräts (12) in seinem installierten Zustand gewährleisten.

2. Wechselstrom-Ladegerät (12) nach Anspruch 1,
wobei der Eingangsbereich (16) und der Ausgangsbereich (18) einander gegenüberliegend an gegenüberliegenden Seiten (14', 14") der Basis (14) angeordnet sind und/oder
wobei die Kabelführung (10) einteilig ausgeführt ist.

3. Wechselstrom-Ladegerät (12) nach Anspruch 1 oder Anspruch 2,
wobei zumindest einige und vorzugsweise alle der jeweiligen Vielzahl von Eingangsleiteraufnahmen (22) in einer Eingangswand (20) ausgebildet sind, die an dem Eingangsbereich (16) vorhanden ist, und zumindest einige und vorzugsweise alle der jeweiligen Vielzahl von Ausgangsleiteraufnahmen (28) in einer Ausgangswand (26) ausgebildet sind, die an dem Ausgangsbereich (18) vorhanden ist, wobei sich die Eingangswand (20) und die Ausgangswand (26) jeweils von der Basis (14) aus erstrecken.

4. Wechselstrom-Ladegerät (12) nach Anspruch 3,
wobei die Eingangswand (20) eine andere durchschnittliche Höhe aufweist als die Ausgangswand (26) und/oder wobei die Eingangswand (20) eine Oberseite (36) aufweist, wobei sich zumindest ein Teil der Oberseite (36) parallel zu der Basis (14) erstreckt und wobei sich optional der Abstand zwischen der Oberseite (36) und der Basis (14) über eine Breite der Eingangswand (20) hinweg ändert, wobei vorzugsweise eine oder mehrere der Eingangsleiteraufnahmen (22) in einer anderen Höhe relativ zu der Basis (14) angeordnet ist/sind als andere der Eingangsleiteraufnahmen (22); und/oder wobei sich eine Oberseite (38) der Ausgangswand (26) zumindest im Wesentlichen parallel zu der Basis (14) erstreckt.

5. Wechselstrom-Ladegerät (12) nach Anspruch 3 oder Anspruch 4,
wobei die Eingangsleiteraufnahmen (22) als Kanäle (24) in der Eingangswand (20) ausgestaltet sind und/oder wobei die Ausgangsleiteraufnahmen (28) als Kanäle (30) in der Ausgangswand (26) ausgestaltet sind.

6. Wechselstrom-Ladegerät (12) nach Anspruch 5,
wobei sich die Kanäle (24, 30) zumindest über einen Teil der Höhe der jeweiligen Eingangswand (20) und Ausgangswand (26) erstrecken, wobei sich die Kanäle (24, 30) optional zumindest teilweise rechtwinklig oder zumindest im Wesentlichen rechtwinklig zu der Basis (14) erstrecken.

7. Wechselstrom-Ladegerät (12) nach einem der vorhergehenden Ansprüche,
wobei insbesondere ein Teil einer Oberseite (36) der Eingangswand (20) und insbesondere ein Teil einer Oberseite (38) der Ausgangswand (26) so ausgestaltet sind, dass sie mit einer Leiterplatte (40) gekoppelt werden können, und wobei ein zwischen der Leiterplatte (40), der Eingangswand (20), der Ausgangswand (26) und der Basis (14) gebildeter Raum als ein Raum (42) für die Aufnahme und Speicherung von elektronischen Komponenten (44) ausgestaltet ist, die der Leiterplatte (40) zugeordnet sind.

8. Wechselstrom-Ladegerät (12) (10) nach Anspruch 1,
wobei Leiterplatten-Ausrichtungsmittel (48) bereitgestellt sind, die als mindestens eines von einem Stift, einem Materialsteg, einer Kuppel und einem Vorsprung ausgestaltet sind, wobei eines oder mehrere der Leiterplatten-Ausrichtungsmittel (48) optional an der Eingangswand (20) und/oder der Ausgangswand (26) bereitgestellt sind, und so ausgestaltet sind, dass sie mit einer Leiterplatte (40) für eine Ausrichtung der Leiterplatte (40) in Bezug auf die Kabelführung (10) gekoppelt werden können, wobei die Leiterplatten-Ausrichtungsmittel (48) vorzugsweise so ausgestaltet sind, dass eine Ausrichtung der Leiterplatte (40) in Bezug auf die Kabelführung (10) in einer X-Richtung und/oder einer Y-Richtung und/oder einer Z-Richtung erfolgen kann.

9. Wechselstrom-Ladegerät (12) nach Anspruch 1,
wobei das Ausrichtungsmittel (46₁) als eine Aussparung oder eine Öffnung oder eine Vertiefung ausgestaltet ist, wobei das Ausrichtungsmittel (46₁) optional an der Basis (14) bereitgestellt ist, wobei das Ausrichtungsmittel (46₁) vorzugsweise so ausgestaltet ist, dass eine Ausrichtung der Kabelführung (10) in Bezug auf das Gehäuse in einer X-Richtung und/oder einer Y-Richtung erfolgen kann.

10. Wechselstrom-Ladegerät (12) nach mindestens einem der vorhergehenden Ansprüche,
das ferner einen oder mehrere Verstärkungsstege (39) umfasst, die die Eingangswand (20) und/oder die Ausgangswand (26) mit der Basis (14) und/oder mit der anderen von der Eingangswand (20) und der Ausgangswand (26) verbinden.

11. Wechselstrom-Ladegerät (12) nach einem der vorhergehenden Ansprüche für ein Elektro- oder Hybridfahrzeug, wobei
das Gehäuse (58, 76) ein zweiteiliges Gehäuse (58, 76) ist;
die Kabelführung (10) in einem unteren Teil (58) des Gehäuses installiert ist, und
eine Leiterplatte (40) zwischen dem Eingangsbereich (16), dem Ausgangsbereich (18) und der Basis (14) der Kabelführung (10) installiert ist,
wobei eine Vielzahl von Eingangs- und Ausgangsleitern (62, 62') in den Eingangs- und Ausgangsleiteraufnahmen (22, 28) geführt werden und jeweilige Enden (70) der Vielzahl von Eingangs- und Ausgangsleitern (62, 62') mit der Leiterplatte (40) in einer gemeinsamen Ebene verbunden sind.

12. Wechselstrom-Ladegerät (12) nach Anspruch 11,
wobei die Leiterplatte (40) elektronische Komponenten (44) umfasst, die auf der Leiterplatte (40) angeordnet sind und sich in einem Raum (42) befinden, der zwischen der Basis (14), der Leiterplatte (40), dem Eingangsbereich (16) und dem Ausgangsbereich (18) ausgebildet ist, wobei ein verbleibender Teil des Raums (42) mit einem Material gefüllt ist.

13. Verfahren zum Zusammenbauen eines Wechselstrom-Ladegeräts (12) nach mindestens einem der Ansprüche 11 und 12, wobei das Verfahren die Schritte umfasst:
- Einführen der Vielzahl von Einzelleitern (62, 62') in das Gehäuse (58, 76) des Wechselstrom-Ladegeräts (12);
- Einlegen der Vielzahl von Einzelleitern (62, 62') in die jeweiligen Eingangs- und Ausgangsleiteraufnahmen (22, 28) der Kabelführung (10);
- Ausrichten von Enden (70) der Vielzahl von Einzelleitern (62, 62') in einer gemeinsamen Ebene; und
- Verbinden der ausgerichteten Enden (70) der Vielzahl von Einzelleitern mit der Leiterplatte (40).

14. Verfahren nach Anspruch 13, wobei ein Werkzeug (60) für den Zusammenbau eines Wechselstrom-Ladegeräts (12) verwendet wird, wobei in dem Wechselstrom-Ladegerät (12) eine Vielzahl von Leitern (62, 62') in einer gemeinsamen Ebene mit einer Leiterplatte (40) verbunden wird, wobei das Werkzeug (60) eine Ausrichtungsplatte (66) und eine Vielzahl von ersten Ausnehmungen (68) umfasst, die in der Ausrichtungsplatte (66) vorhanden sind, wobei jede der Vielzahl von ersten Ausnehmungen (68) so ausgestaltet ist, dass sie Enden (70) von jeweiligen Eingangs- und Ausgangsleitern (62, 62') aufnehmen kann, wobei jede der Vielzahl von ersten Ausnehmungen (68) eine Basis (72) aufweist und alle Basen (72) der Vielzahl von ersten Ausnehmungen (68) in einer gemeinsamen Ebene angeordnet sind, wobei die Ausrichtungsplatte (66) optional eine oder mehrere zweite Ausnehmungen (74) umfasst, die so ausgestaltet sind, dass sie Leiterplatten-Ausrichtungsmittel (48) der Kabelführung (10) aufnehmen können, so dass die Enden (70) der Eingangs- und Ausgangsleiter (62, 62') relativ zu den Leiterplatten-Ausrichtungsmitteln (48) ausgerichtet werden können.

## Revendications

1. Chargeur AC (12) comprenant un boîtier (58, 76) et un guide-câbles (10) positionné dans le boîtier (58, 76),
**caractérisé en ce que**
le guide-câbles (10) comprend une base (14), une région d'entrée (16) et une région de sortie (18), dans lequel la région d'entrée (16) et la région de sortie (18) sont respectivement disposées sur la base (14) et comprennent respectivement une pluralité de récepteurs de conducteurs d'entrée et de sortie (22, 28), au moins des extrémités (32, 34) de la pluralité respective de récepteurs de conducteurs (22, 28) étant disposées au moins généralement parallèlement les unes aux autres et de telle sorte que les extrémités (32, 34) s'étendent au moins sensiblement perpendiculairement à la base (14),
et **en ce que**
le guide-câbles (10) comprend des moyens d'alignement (46₁) configurés pour assurer un alignement correct du guide-câbles (10) par rapport à une partie inférieure (58) du boîtier (58, 76) du chargeur AC (12) dans son état installé.

2. Chargeur AC (12) selon la revendication 1,
dans lequel la région d'entrée (16) et la région de sortie (18) sont disposées à l'opposé l'une de l'autre sur des côtés opposés (14', 14") de la base (14) et/ou
dans lequel le guide-câbles (10) est conçu d'une seule pièce.

3. Chargeur AC (12) selon la revendication 1 ou la revendication 2,
dans lequel au moins une partie et de préférence la totalité de la pluralité respective de récepteurs de conducteurs d'entrée (22) sont formés dans une paroi d'entrée (20) présente dans la région d'entrée (16) et au moins une partie et de préférence la totalité de la pluralité respective de récepteurs de conducteurs de sortie (28) sont formés dans une paroi de sortie (26) présente dans la région de sortie (18), la paroi d'entrée (20) et la paroi de sortie (26) s'étendant respectivement à partir de la base (14).

4. Chargeur AC (12) selon la revendication 3,
dans lequel la paroi d'entrée (20) a une hauteur moyenne différente de celle de la paroi de sortie (26) et/ou dans lequel la paroi d'entrée (20) a un côté supérieur (36), au moins une partie du côté supérieur (36) s'étendant parallèlement à la base (14) et facultativement la distance entre le côté supérieur (36) et la base (14) changeant sur une largeur de la paroi d'entrée (20), de préférence dans lequel un ou plusieurs des récepteurs de conducteurs d'entrée (22) sont disposés à une hauteur différente par rapport à la base (14) par rapport aux autres récepteurs de conducteurs d'entrée (22) ; et/ou dans lequel un côté supérieur (38) de la paroi de sortie (26) s'étend au moins sensiblement parallèlement à la base (14).

5. Chargeur AC (12) selon la revendication 3 ou la revendication 4,
dans lequel les récepteurs de conducteurs d'entrée (22) sont configurés comme des canaux (24) dans la paroi d'entrée (20) et/ou dans lequel les récepteurs de conducteurs de sortie (28) sont configurés comme des canaux (30) dans la paroi de sortie (26).

6. Chargeur AC (12) selon la revendication 5,
dans lequel les canaux (24, 30) s'étendent sur au moins une partie de la hauteur de la paroi d'entrée (20) et de la paroi de sortie (26) respectives, facultativement les canaux (24, 30) s'étendant au moins partiellement perpendiculairement ou au moins sensiblement perpendiculairement à la base (14).

7. Chargeur AC (12) selon l'une des revendications précédentes,
dans lequel, en particulier une partie d'un côté supérieur (36) de la paroi d'entrée (20) et en particulier une partie d'un côté supérieur (38) de la paroi de sortie (26) sont configurées pour être couplées à une carte de circuit imprimé, PCB, (40) et un espace formé entre la PCB (40), la paroi d'entrée (20), la paroi de sortie (26) et la base (14) étant configuré comme un espace (42) pour la réception et le stockage de composants électroniques (44) associés à la PCB (40).

8. Chargeur AC (12) (10) selon la revendication 1,
dans lequel des moyens d'alignement de PCB (48) sont prévus et configurés comme au moins l'un d'une broche, d'une nervure de matériau, d'un dôme et d'une saillie, un ou plusieurs des moyens d'alignement de PCB (48) étant facultativement prévus à au moins l'une de la paroi d'entrée (20) et de la paroi de sortie (26), et étant configurés pour être couplés à une PCB (40) pour un alignement de la PCB (40) par rapport au guide-câbles (10), dans lequel les moyens d'alignement de PCB (48) sont de préférence configurés de telle sorte qu'un alignement de la PCB (40) par rapport au guide-câbles (10) peut avoir lieu dans au moins l'une d'une direction X, d'une direction Y et d'une direction Z.

9. Chargeur AC (12) selon la revendication 1,
dans lequel les moyens d'alignement (46₁) sont configurés comme l'un d'une découpe, d'une ouverture, d'un évidement, les moyens d'alignement (46₁) étant facultativement prévus sur la base (14), dans lequel les moyens d'alignement (46₁) sont de préférence configurés de telle sorte qu'un alignement du guide-câbles (10) par rapport au boîtier peut avoir lieu dans au moins l'une d'une direction X et d'une direction Y.

10. Chargeur AC (12) selon au moins l'une des revendications précédentes,
comprenant en outre une ou plusieurs nervures de renfort (39) qui relient au moins l'une de la paroi d'entrée (20) et de la paroi de sortie (26) à la base (14) et/ou à l'autre de la paroi d'entrée (20) et de la paroi de sortie (26).

11. Chargeur AC (12) selon l'une des revendications précédentes pour un véhicule électrique ou hybride, dans lequel
le boîtier (58, 76) est un boîtier en deux parties (58, 76) ;
le guide-câbles (10) est installé dans une partie inférieure (58) dudit boîtier, et
une PCB (40) est installée entre ladite région d'entrée (16), ladite région de sortie (18) et ladite base (14) du guide-câbles (10),
dans lequel une pluralité de conducteurs d'entrée et de sortie (62, 62') sont guidés dans lesdits récepteurs de conducteurs d'entrée et de sortie (22, 28) et les extrémités respectives (70) de la pluralité de conducteurs d'entrée et de sortie (62, 62') sont connectées à la PCB (40) dans un plan commun.

12. Chargeur AC (12) selon la revendication 11,
dans lequel la PCB (40) comprend des composants électroniques (44) qui sont disposés sur la PCB (40) et présents dans un espace (42) formé entre la base (14), la PCB (40), la région d'entrée (16) et la région de sortie (18), une partie restante de l'espace (42) étant remplie d'un matériau.

13. Procédé d'assemblage d'un chargeur AC (12) selon au moins l'une des revendications 11 et 12, le procédé comprenant les étapes consistant à :
- insérer la pluralité de conducteurs individuels (62, 62') dans le boîtier (58, 76) du chargeur AC (12) ;
- placer la pluralité de conducteurs individuels (62, 62') dans les récepteurs de conducteurs d'entrée et de sortie respectifs (22, 28) du guide-câbles (10) ;
- aligner les extrémités (70) de la pluralité de conducteurs individuels (62, 62') dans un plan commun ; et
- connecter les extrémités alignées (70) de la pluralité de conducteurs individuels à la PCB (40).

14. Procédé selon la revendication 13, dans lequel un outil (60) pour l'assemblage d'un chargeur AC (12) est utilisé, dans lequel chargeur AC (12) une pluralité de conducteurs (62, 62') sont connectés à une PCB (40) dans un plan commun, l'outil (60) comprenant une plaque d'alignement (66) et une pluralité de premiers évidements (68) présents dans la plaque d'alignement (66), chacun de la pluralité de premiers évidements (68) étant configuré pour recevoir des extrémités (70) de conducteurs d'entrée et de sortie respectifs (62, 62'), chacun de la pluralité de premiers évidements (68) ayant une base (72) et chacune des bases (72) de la pluralité de premiers évidements (68) étant disposée dans un plan commun, la plaque d'alignement (66) comprenant facultativement un ou plusieurs seconds évidements (74) configurés pour recevoir des moyens d'alignement de PCB (48) du guide-câbles (10) de telle sorte que les extrémités (70) des conducteurs d'entrée et de sortie (62, 62') peuvent être alignées par rapport auxdits moyens d'alignement de PCB (48).
